(19) **Europäisches Patentamt European Patent Office Office européen des brevets**

(11) **EP 4 015 276 B1**

(12) **FASCICULE DE BREVET EUROPEEN**

(45) Date de publication et mention de la délivrance du brevet:
**10.12.2025 Bulletin 2025/50**

(21) Numéro de dépôt: **21216551.8**

(22) Date de dépôt: **21.12.2021**

(51) Classification Internationale des Brevets (IPC):
**B60K 28/04** (2006.01)    **B60R 16/023** (2006.01)
**B60W 40/09** (2012.01)    **B60W 50/14** (2020.01)
**B62D 1/04** (2006.01)    **B62D 1/06** (2006.01)

(52) Classification Coopérative des Brevets (CPC):
**B60W 50/14; B60W 40/09; B62D 1/046; B62D 1/06;** B60W 2556/10

(54) **PROCÉDÉ ET DISPOSITIF DE MESURE D'UN CONTACT OU D'UNE PROXIMITÉ AVEC UN VOLANT DE VÉHICULE**

VERFAHREN UND VORRICHTUNG ZUR MESSUNG EINES KONTAKTS ODER EINER NÄHE ZU EINEM FAHRZEUGLENKRAD

METHOD AND DEVICE FOR MEASURING A CONTACT OR PROXIMITY WITH A STEERING WHEEL OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2020 FR 2013852**

(43) Date de publication de la demande:
**22.06.2022 Bulletin 2022/25**

(73) Titulaire: **Autoliv Development AB 447 83 Vårgårda (SE)**

(72) Inventeurs:
• **DABAGHI, Youssef-Philippe 95800 Paris (FR)**
• **DORAI, Yosra 95800 Paris (FR)**
• **LEVY, Adelice 95800 Paris (FR)**
• **POTEL-CHARLETTE, Nathalie 95800 Paris (FR)**

(74) Mandataire: **Poindron, Cyrille Novagraaf International SA Chemin de l'Echo 3 1213 Onex (CH)**

(56) Documents cités:
WO-A1-2018/211033    JP-A- 2019 023 012
JP-B2- 5 640 882    US-A1- 2018 087 929
US-A1- 2018 152 185

EP 4 015 276 B1

**Description**

Domaine technique de l'invention

La présente invention concerne de manière générale un procédé et dispositif de mesure d'un contact ou d'une proximité avec un volant de véhicule monté sur un véhicule automobile.

État de la technique

Il est connu dans l'art antérieur des procédés et dispositifs de mesure d'un contact ou d'une proximité avec un volant de véhicule, comme le montre par exemple le document US 2017/0029021 A1. En contrepartie, ce système peut manquer de fiabilité notamment si des paramètres environnementaux dans l'habitacle varient. En effet, des variations de température, d'humidité peuvent provoquer des variations sur la mesure d'un contact ou d'une proximité de l'utilisateur avec le volant de véhicule. Il en va de même si l'utilisateur porte des gants, ou si plusieurs utilisateurs utilisent le même véhicule : la taille des mains, la présence de sueur peut varier et provoquer des variations sur la mesure d'un contact ou d'une proximité de l'utilisateur avec le volant de véhicule.

De telles variations peuvent poser problème s'il faut déterminer des postures ou des scenarios d'utilisation (tenue du volant à pleine main, à quatre doigts, à deux doigts...). Cette classification est importante, surtout dans le cas où une conduite autonome du véhicule est possible ou autorisée : il faut savoir constamment si le conducteur tient le volant, dans quelles conditions, et s'il peut reprendre le contrôle du véhicule.

Le document JP2019023012A révèle les caractéristiques du préambule de la revendication 1 et divulgue un procédé de correction du signal de mesure d'un capteur de détection d'un volant de véhicule, le procédé prenant notamment en compte des valeurs inférieures à un seuil représentatif d'une situation dans laquelle le volant n'est pas tenu en main ni contacté par l'utilisateur.

Exposé de l'invention

Un but de la présente invention est de répondre aux inconvénients des documents de l'art antérieur mentionnés ci-dessus et en particulier, tout d'abord, de proposer un procédé et dispositif de mesure d'un contact ou d'une proximité d'un utilisateur avec un volant de véhicule qui procurent des mesures fiables et précises, même si les conditions environnementales ou l'utilisateur varient.

Pour cela un premier aspect de l'invention concerne un procédé de mesure d'un contact ou d'une proximité d'un utilisateur avec un volant de véhicule automobile,

le véhicule comprenant :

- le volant de véhicule,
- au moins un capteur de détection d'un contact ou d'une proximité de l'utilisateur avec le volant de véhicule automobile, agencé pour générer un signal de mesure,
- une première unité de mémoire stockant au moins un seuil de détection,
- une deuxième unité de mémoire agencée pour stocker des valeurs du signal de mesure,
- une unité de commande agencée pour recevoir un signal de mesure du capteur de détection et pour comparer le signal de mesure avec le seuil de détection, et pour participer à l'envoi d'un message d'alerte à l'utilisateur en fonction de la comparaison du signal de mesure avec le seuil de détection,

le procédé comprenant les étapes consistant à :

- effectuer, avec le capteur de détection, des mesures de contact ou de proximité de l'utilisateur avec le volant de véhicule automobile au cours d'une phase d'utilisation du volant de véhicule conduisant à générer un signal de mesure,
- stocker dans la deuxième unité de mémoire au moins une partie des valeurs des mesures effectuées pendant que l'occupant touche le volant,
- ajuster le seuil de détection en fonction des valeurs stockées et/ou d'un traitement effectué sur les valeurs stockées, par exemple une fois un nombre prédéterminé de valeurs stockées atteint.

Le procédé selon la mise en œuvre ci-dessus comprend une étape d'ajustement d'au moins un seuil de détection, ce qui procure une adaptation dynamique, en fonction des mesures déjà effectuées, ou en cours d'acquisition. En conséquence, le procédé permet d'ajuster les seuils et donc l'envoi de messages d'alerte en fonction des mesures prises lorsque le volant est effectivement tenu en main ou contacté par l'utilisateur, et l'ajustement est donc effectué en fonction de l'utilisateur, de sa morphologie, des conditions environnementales ou encore si des gants sont portés lors de l'utilisation du volant et non pas sur des critères prédéfinis en usine.

Un autre aspect alternatif ou complémentaire de l'invention peut concerner un procédé de mesure d'un contact ou d'une proximité d'un utilisateur avec un volant de véhicule automobile,

le véhicule pouvant comprendre :

- le volant de véhicule,
- au moins un capteur de détection d'un contact ou d'une proximité de l'utilisateur avec le volant de véhicule automobile, agencé pour générer un signal de mesure,
- une première unité de mémoire stockant au moins un seuil de détection,
- une deuxième unité de mémoire agencée pour stocker des valeurs du signal de mesure,
- une unité de commande agencée pour recevoir un signal de mesure du capteur de détection et pour comparer le signal de mesure avec le seuil de détection, et pour participer à l'envoi d'un message d'alerte à l'utilisateur en fonction de la comparaison du signal de mesure avec le seuil de détection,

le procédé pouvant comprendre les étapes consistant à :

- effectuer, avec le capteur de détection, des mesures de contact ou de proximité de l'utilisateur avec le volant de véhicule automobile au cours d'une phase d'utilisation du volant de véhicule conduisant à générer un signal de mesure,
- stocker dans la deuxième unité de mémoire au moins une partie des valeurs des mesures effectuées,
- ajuster une distance ou un écart entre deux seuils de détection en fonction des valeurs stockées et/ou d'un traitement effectué sur les valeurs stockées, par exemple une fois un nombre prédéterminé de valeurs stockées atteint. Selon la mise en œuvre ci-dessus, un écart entre des seuils de détection peut être ajusté. Une telle mise à jour procure aussi une adaptation dynamique, en fonction des mesures déjà effectuées, ou en cours d'acquisition. En conséquence, le procédé permet d'ajuster les seuils et donc l'envoi de messages d'alerte en fonction des mesures prises lorsque le volant est effectivement tenu en main ou contacté par l'utilisateur, et l'ajustement est donc effectué en fonction de l'utilisateur, de sa morphologie, des conditions environnementales ou encore si des gants sont portés lors de l'utilisation du volant et non pas sur des critères prédéfinis en usine Les seuils de détection peuvent chacun être définis statistiquement pour distinguer des scénarios de prise en main du volant par l'utilisateur.

Selon un mode de réalisation, la première et/ou la deuxième unité de mémoire peut être une mémoire tampon (buffer en langue anglaise) ou toute autre dispositif (ou zone d'un dispositif) de stockage de données, permettant de stocker des données de manière temporaire ou durable.

Selon un mode de réalisation, ledit au moins un capteur de détection d'un contact ou d'une proximité de l'utilisateur avec le volant de véhicule automobile peut être un capteur du type capacitif, ou inductif.

Selon un mode de réalisation, les mesures peuvent être stockées dans la deuxième unité de mémoire si elles sont exclues d'une zone transitoire. Le choix d'exclure les mesures des phases transitoires permet de procurer un ajustement fiable et procure aussi une stabilité dans les ajustements des seuils, ce qui contribue encore à discriminer des postures ou usages sans risque de faire des fausses détections.

Selon un mode de réalisation, une zone de mesure peut être déclarée transitoire si au moins deux mesures successives diffèrent de plus de 1%, et de préférence de plus de 0.5%. En particulier, dans le cas d'un capteur capacitif, une zone de mesure peut être déclarée transitoire si au moins deux mesures successives diffèrent de plus de 0.5 pF, et de préférence de plus de 0.3 pF.

Selon un mode de réalisation, les mesures de contact ou de proximité de l'utilisateur avec le volant de véhicule automobile au cours d'une phase d'utilisation du volant de véhicule conduisant à générer un signal de mesure peuvent être effectuées de manière séquentielle dans le temps. En particulier, pour un même capteur de détection, les mesures de contact ou de proximité de l'utilisateur avec le volant de véhicule automobile au cours d'une phase d'utilisation du volant de véhicule conduisant à générer un signal de mesure peuvent être effectuées de manière séquentielle dans le temps. En particulier, pour deux capteurs de détection distincts, les mesures de contact ou de proximité de l'utilisateur avec le volant de véhicule automobile au cours d'une phase d'utilisation du volant de véhicule conduisant à générer un signal de mesure pour chaque capteur de détection peuvent être effectuées de manière séquentielle dans le temps, et peuvent être synchronisées ou non entre les capteurs de détection.

Selon un mode de réalisation, le procédé de mesure peut comprendre les étapes consistant à :

- comparer le seuil de détection ajusté avec au moins une mesure du signal de mesure,
- participer à l'envoi d'un message ou d'une information, par exemple d'alerte à l'utilisateur en fonction de la comparaison du signal de mesure avec le seuil de détection.

Selon un mode de réalisation, l'étape de comparaison avec le seuil de détection peut être effectuée :

- sur au moins une valeur mesurée avant ou après la mise à jour du seuil, et/ou
- sur une valeur, telle qu'une moyenne ou une médiane, calculée à partir d'au moins une valeur mesurée avant ou après la mise à jour du seuil.

Selon un mode de réalisation, l'étape de comparaison du seuil de détection ajusté avec au moins une mesure du signal de mesure peut être suivie d'une étape de catégorisation de la valeur mesurée dans une catégorie de quantité ou de nature de contact parmi une pluralité de catégories de quantité ou de nature de contact. La catégorisation permet typiquement de déterminer si l'utilisateur tient le volant à deux mains (contact paume et tous les doigts des deux mains), à une main (contact paume et tous les doigts d'une main), à quatre doigts, à trois doigts...

Selon un mode de réalisation, les mesures peuvent être stockées dans la deuxième unité de mémoire, si les valeurs des mesures effectuées sont supérieures à un seuil de bruit prédéterminé, et/ou si elles sont au moins supérieures à une valeur de bruit prédéterminée, et/ou comprises dans un intervalle de calibration prédéterminé. En d'autres termes, seuls les seuils correspondants à une valeur du signal de mesure suffisamment importante sont ajustés. Les seuils proches du zéro ne sont pas ajustés. On peut par exemple choisir de ne pas ajuster les seuils qui sont inférieurs à 30% d'une valeur pleine échelle du capteur de mesure. Autrement dit, les valeurs inférieures à un seuil de bruit ne sont pas prises en compte. Cela représente la situation où le volant ne serait pas tenu en main. Dans une telle situation, le signal émis par le capteur de détection est faible et sa prise en compte peut conduire à des erreurs ou des calculs peu ou pas significatifs. Selon ce mode de réalisation, le procédé exclue les valeurs du signal lorsque le volant n'est pas pris en main. Les phases de vie ou d'utilisation pendant lesquelles le volant n'est pas pris en main ou pas tenu par l'utilisateur ne sont pas prises en compte pour adapter les seuils d'alerte.

Selon un mode de réalisation, les mesures peuvent être stockées dans la deuxième unité de mémoire, si les valeurs des mesures effectuées sont comprises dans un intervalle de valeurs correspondant à un scénario particulier de prise en main du volant. On peut par exemple prévoir de définir un intervalle de valeurs qui correspond à la prise en main du volant avec une main ou avec deux mains, pour des individus allant du 5ème percentile au 95ème percentile.

Selon un mode de réalisation, le seuil de détection peut être ajusté sur la base d'un traitement des valeurs stockées comprenant un partitionnement en k-moyennes ou k-médianes. Un tel traitement des données permet de discriminer et classer de manière robuste et reproductibles des mesures faites en séquentiel en plusieurs classes de valeurs.

Selon un mode de réalisation, un nombre k de partitions pouvant être déterminé, au moins une partition pouvant présenter un barycentre, et le seuil de détection peut être ajusté pour être:

- compris dans une plage de 55% à 15% dudit barycentre, de préférence de 45% à 25% dudit barycentre et très préférentiellement de 35% à 25% dudit barycentre, ou
- compris dans une plage de 115% à 155% dudit barycentre, de préférence de 125% à 145% dudit barycentre et très préférentiellement de 125% à 135% dudit barycentre.

La demanderesse s'est aperçue que de positionner le seuil de manière décalée par rapport au barycentre permet de distinguer efficacement les mesures afin d'en déduire un scénario d'usage.

Selon un mode de réalisation, un nombre k de partitions pouvant être déterminé, au moins deux partitions adjacentes pouvant présenter chacune un barycentre, et le seuil de détection peut être ajusté pour être compris dans une plage allant de 45% à 85% de l'intervalle allant du plus petit barycentre au plus grand barycentre des deux partitions adjacentes, de préférence dans une plage allant de 55% à 75% de l'intervalle allant du plus petit barycentre au plus grand barycentre des deux partitions adjacentes et très préférentiellement dans une plage allant de 75% à 65% de l'intervalle allant du plus petit barycentre au plus grand barycentre des deux partitions adjacentes.

Selon la mise en œuvre ci-dessus, le seuil est positionné non pas au milieu d'une plage séparant deux barycentres, mais le seuil est décalé vers le plus faible des deux barycentres, ce qui permet de distinguer efficacement les mesures afin d'en déduire un scénario d'usage. En d'autres termes, la sensibilité est augmentée.

Selon un mode de réalisation, le seuil de détection peut être ajusté dans une plage de valeurs bornée par une valeur haute et/ou une valeur basse. Cette mise en œuvre permet de palier un manque de convergence des mesures successives.

Selon un mode de réalisation, le procédé de mesure peut comprendre une phase d'initialisation, comprenant les étapes consistant à:

- initialiser, ou réinitialiser, le seuil de détection à une valeur de base,
- effectuer, avec le capteur de détection, des mesures de contact ou de proximité de l'utilisateur avec le volant de véhicule automobile au cours d'une phase d'utilisation du volant de véhicule conduisant à générer un signal de mesure,
- stocker dans la deuxième unité de mémoire les valeurs des mesures effectuées, de préférence si ou lorsqu'elles sont supérieures à un seuil initial prédéterminé, jusqu'à atteindre le nombre de valeurs prédéterminé. Le seuil initial prédéterminé peut correspondre à une valeur représentative d'un contact ou d'une proximité d'une surface minimale d'un membre de l'utilisateur (par exemple au moins un doigt, deux doigts, le pouce et un autre doigt, une main complète...).

La phase d'initialisation permet de limiter les erreurs de classification initiales si un nombre de valeurs de mesure est insuffisant ou propice à générer une fausse catégorisation, et à faire converger au plus vite le traitement des données vers des valeurs stables et fiables.

Selon un mode de réalisation, le stockage dans la deuxième unité de mémoire d'une valeur d'une mesure peut être effectué uniquement si un écart entre deux mesures successives est inférieur à moins de 5%, et de préférence à moins de 3%.

Selon un mode de réalisation, le stockage dans la deuxième unité de mémoire d'une valeur d'une mesure peut être effectué uniquement si la valeur est comprise dans un intervalle de confiance prédéterminé, par exemple compris dans une plage de valeur allant de 50 % à 100% de la pleine échelle du capteur de mesure. L'intervalle de confiance peut être choisi pour éviter toute erreur d'interprétation. Par exemple, on peut prédéterminer statistiquement que la tenue à deux mains pour 95% ou plus des cas donne un signal de mesure donné, et on peut choisir de prendre en compte uniquement les mesures supérieures à ce signal de mesure donné : on est sûr que l'utilisateur tient alors le volant à deux mains.

Selon un mode de réalisation, une fois le nombre de valeurs stockées prédéterminé atteint, un premier seuil de détection peut être ajusté, et un deuxième seuil de détection peut être ajusté sur la base du premier seuil de détection. Selon cette mise en œuvre, une fois un seuil particulier ajusté, d'autres seuils peuvent en être déduits. Par exemple, on peut attendre de déterminer l'ajustement du seuil de tenue du volant à deux mains, avant d'ajuster celui de tenue à une main en conséquence, typiquement en divisant le seuil par 2. Cela évite d'attendre d'avoir des mesures de tenue du volant à une main, et en plus, cela peut éviter de générer des ajustements incorrects. En particulier, il peut être difficile de différencier une valeur de signal entre la tenue du volant par une seule grande main, et la tenue du volant à deux petites mains. En effet, la valeur du signal de mesure de tenue avec une seule main dont la taille correspond au quatre-vingt-quinzième centile peut être confondue avec un signal de mesure de tenue avec deux mains dont la taille correspond au cinquième centile.

Selon un mode de réalisation, le seuil de détection peut être ajusté uniquement ou exclusivement sur la base des valeurs stockées et/ou d'un traitement des valeurs stockées. En d'autres termes, seules les données de mesure sont utilisées pour ajuster les seuils. Aucune autre information n'est nécessaire, et le procédé est autonome et ne se sert que des mesures du capteur dont les mesures sont ensuite classées selon le seuil ajusté.

Selon un mode de réalisation,
le volant de véhicule peut comprendre deux capteurs ou plus de détection d'un contact ou d'une proximité de l'utilisateur avec le volant de véhicule, dans lequel les étapes de mesure de contact ou de proximité, de stockage de valeurs des mesures, et d'ajustement du seuil de détection peuvent être effectuées pour chaque capteur, de préférence indépendamment, par exemple de manière séquentielle, ou décalée ou simultanée. Ceci permet de distinguer une main gauche d'une main droite, et de proposer des seuils ajustés et fiables, même si une seule main porte un gant, ou si une seule main est exposée à un courant d'air chaud ou froid.

Selon un mode de réalisation, le procédé de mesure peut être mis en œuvre par ordinateur.

Un deuxième aspect de la divulgation concerne un système d'assistance au conducteur d'un véhicule, pouvant comprendre :

- au moins un capteur de détection d'un contact ou d'une proximité de l'utilisateur avec le volant de véhicule automobile, agencé pour générer un signal de mesure,
- une première unité de mémoire stockant au moins un seuil de détection,
- une deuxième unité de mémoire agencée pour stocker des valeurs du signal de mesure,
- une unité de commande agencée pour mettre en œuvre le procédé selon le premier aspect de la divulgation.

Un troisième aspect de la divulgation concerne un véhicule automobile, pouvant comprendre le système d'assistance selon le deuxième aspect de la divulgation.

Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

[fig. 1] représente un véhicule avec un volant comprenant un dispositif de mesure d'un contact ou d'une proximité d'un utilisateur avec le volant de véhicule ;

[fig. 2] représente le volant de véhicule de la figure 1, comprenant un dispositif de mesure d'un contact ou d'une proximité d'un utilisateur avec le volant de véhicule ;

[fig. 3] représente une coupe simplifiée d'une première alternative de la jante du volant de véhicule de la figure 2 ;

[fig. 4] représente une coupe simplifiée d'une deuxième alternative de la jante du volant de véhicule de la figure 2 ;

[fig. 5] représente un graphique montrant des mesures de contact ou de proximité effectuées au cours du temps avec le dispositif de la figure 1, et l'évolution de seuils d'alerte ajustés par un procédé de mesure, en fonction des mesures effectuées ;

[fig. 6] représente un graphique montrant une phase d'initialisation du procédé de mesure ajustant les seuils comme représenté sur la figure 5 ;

[fig. 7] représente une alternative ou un complément de l'ajustement des seuils de mesure de la figure 5.

Description détaillée de mode(s) de réalisation

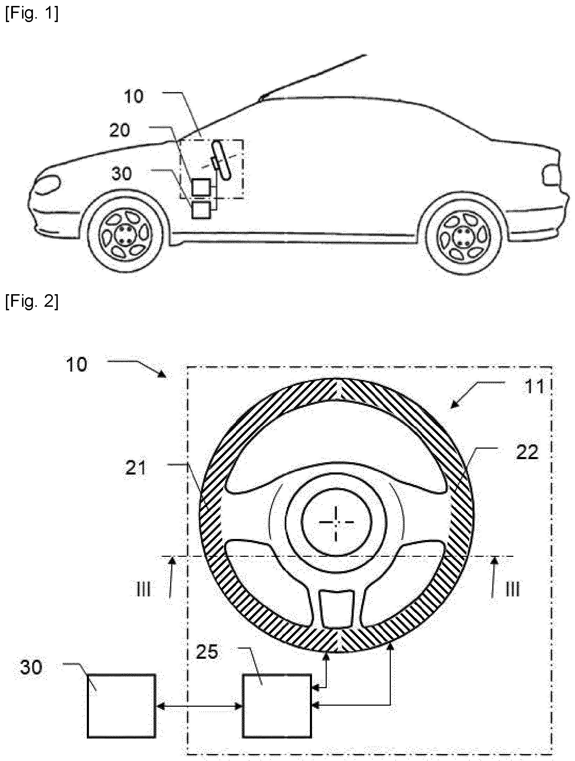

La figure 1 représente un véhicule équipé d'un volant de véhicule 10 ayant une jante 11, et équipé d'un dispositif de mesure 20 d'un contact ou d'une proximité d'un utilisateur avec le volant de véhicule 10. Le dispositif de mesure 20 est embarqué dans le volant 10 (bien que représenté distinct sur la figure 1).
Le dispositif de mesure est agencé pour détecter un contact ou une proximité entre un utilisateur et le volant. Typiquement, le dispositif de mesure 20 sert à détecter si le conducteur touche le volant, voire dans quelles conditions (à une main, à deux mains, en pinçant la jante avec deux doigts, trois doigts...).
A cet effet, le véhicule comprend aussi par exemple une unité de commande électronique centrale 30 connectée au dispositif de mesure 20 et agencée pour envoyer un message d'alerte au conducteur en fonction de la tenue (ou du mode de tenue) du volant détectée par le dispositif de mesure, et/ou pour décider si une conduite autonome ou un degré de conduite autonome est compatible avec la tenue du volant détectée par le dispositif de mesure 20.
En pratique, l'unité de commande électronique centrale 30 peut être connectée à une unité de commande secondaire 25 (visible figure 2) du dispositif de mesure 20 et peut recevoir une information catégorisée de tenue du volant de véhicule 10. En particulier, on peut prévoir que le dispositif de mesure 20 peut envoyer une information traitée que le volant est tenu à deux main, à une main...
A cet effet, et comme le montrent les figures 2, 3 et 4, le volant de véhicule 10 est équipé, notamment au niveau de la jante 11 de capteurs de détection 21, 22, 23, 24, chacun pouvant détecter un contact ou une proximité de l'utilisateur avec le volant de véhicule 10, et chacun agencés pour générer un signal de mesure, qui est envoyé à une unité de commande secondaire 25 dans le volant de véhicule 10 pour être traités. En effet, sans être représenté, l'unité de commande secondaire 25 de préférence embarquée sur le volant comprend typiquement une unité de traitement, une première unité de de mémoire stockant au moins un seuil de détection, une deuxième unité de mémoire agencée pour stocker des valeurs des signaux de mesure...

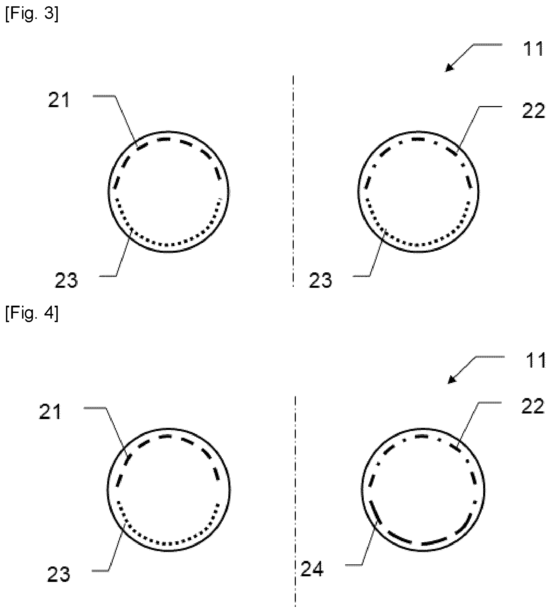

La figure 3 représente une coupe selon l'axe III-III d'une première alternative de la jante 11, où on voit les parties droite et gauche de la jante 11. Sur la partie de gauche, un premier capteur de détection 21 est positionné sur la partie haute, c'est-à-dire en vis-à-vis du conducteur. De la même manière, un deuxième capteur de détection 22 est positionné sur la partie haute de la jante 11 sur la partie droite. Enfin, un troisième capteur de détection 23 est positionné sur la partie inférieure de la jante 11, à gauche et à droite. On peut prévoir la configuration "miroir", c'est-à-dire deux capteurs distincts droite/gauche en partie inférieure, et un seul capteur en partie haute. En d'autres termes, selon cette mise en œuvre de la figure 3, la jante 11 est équipée de trois capteurs de détection distincts : droite/gauche en haut ou en bas de la jante 11, et un capteur de détection commun sur la partie opposée.
La figure 4 représente la coupe selon l'axe III-III d'une deuxième alternative de la jante 11, où on voit les parties droite et gauche de la jante 11. Dans cette mise en œuvre, quatre capteurs de détection 21, 22, 23, 24 sont prévus, deux par moitié gauche ou droite de la jante 11, c'est-à-dire un capteur de détection 21 ou 22 en partie supérieure de la jante 11 la figure 4, et un capteur de détection 23 ou 24 en partie inférieure de la jante 11 la figure 4.

On peut prévoir d'autres configurations avec plus ou moins de capteurs de détection (typiquement un ou deux capteurs), qui couvrent plus ou moins la jante 11, et/ou les branches du volant de véhicule 10. On peut prévoir sur la volant de véhicule 10 ou la jante 11 d'autres équipements électrique ou électronique tels qu'un dispositif de chauffage, d'affichage ou de commande de dispositifs d'info divertissement. Dans tous les cas, les capteurs de détection peuvent être du type capacitif, typiquement agencés sous une gaine décorative de la jante 11. Typiquement, un courant ou une tension est appliquées aux capteurs de détection pour en déduire une capacité qui varie en fonction du contact ou de la proximité du conducteur avec le volant de véhicule 10.

Comme expliqué ci-dessus, le signal de chaque capteur de détection est reçu par l'unité de commande secondaire 25 et on peut prévoir par exemple les étapes suivantes pour exploiter les informations et en déduire comment le conducteur tient le volant de véhicule 10 : amplification, et/ou filtrage, et/ou lissage, et/ou échantillonnage, et/ou numérisation, et/ou stockage de valeurs, et/ou comparaison avec un seuil, et/ou catégorisation de la tenue en fonction de la comparaison, et/ou envoi à l'unité de commande électronique centrale 30 du signal traité ou de la catégorisation de la mesure effectuée ...

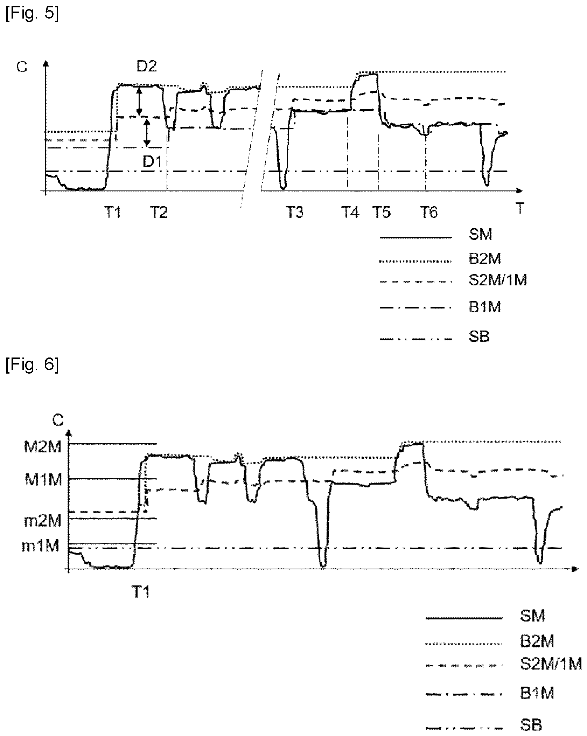

La figure 5 montre un exemple de signal de mesure au cours du temps, et du traitement effectué par le procédé selon la divulgation.

Dans le détail, la représentation au cours du temps est effectuée par :

- un trait continu pour le signal de mesure SM d'un des capteurs de détection de la jante 11 (par exemple le capteur 23 de la figure 3),
- un trait en petits pointillés pour le calcul du barycentre B2M (ou de la moyenne) des valeurs des mesures lorsque la jante est tenue à deux mains,
- un trait en pointillés pour le seuil S2M/1M appliqué pour catégoriser une mesure indiquant que le volant est tenu à deux mains, ou à une main,
- un trait mixte pour le calcul du barycentre B1M (ou de la moyenne) des valeurs des mesures lorsque la jante est tenue à une main
- un trait mixte double pour indiquer un seuil minimal de prise en compte SB, ou seuil de bruit.

Avant le temps T1, le signal de mesure SM est faible ou nul, on peut en déduire que le conducteur ne tient pas la jante 11 au niveau du capteur de détection en question. Comme le montre le graphique, le signal est inférieur au seuil minimal de prise en compte SB, les valeurs sont ignorées et ne sont pas prises en compte pour un ajustement de seuil. En effet, prendre en compte des valeurs de mesure lorsque le volant n'est pas tenu en main peut revenir à faire des ajustements de seuil inappropriées, et/ou peu significatives. De plus, ne prendre en compte que des valeurs supérieures au seuil minimal de prise en compte SB revient à garantir que les ajustements ultérieurs refléteront vraiment la situation de prise en main ou de tenue du volant. On peut citer les paramètres suivant qui peuvent influencer les valeurs du signal : la morphologie de l'utilisateur (s'il a des petites ou grandes mains), ou les conditions d'utilisation (l'utilisateur porte des gants), ou les conditions environnementales (l'air est très sec ou très humide) ou la température.

Au temps T1 cependant, le signal de mesure SM augmente, dépasse le seuil minimal de prise en compte SB et ensuite le seuil S2M/1M indiquant que le volant est tenu à deux mains. Dès que le signal de mesure SM est supérieur au seuil minimal de prise en compte SB et se stabilise, (c'est-à-dire que deux mesures successives diffèrent de moins de 3% par exemple), alors on voit que le barycentre B2M (des valeurs indiquant que le volant est tenu à deux mains) est mis à jour, un peu après T1. A cet effet, les valeurs de mesure du signal de mesure SM peuvent être stockées dans la deuxième unité de mémoire de l'unité de commande secondaire 25, pour être utilisées lors de la mise à jour du seuil S2M/1M par l'unité de traitement de l'unité de commande secondaire 25. On peut par exemple faire une moyenne, une moyenne glissante, un calcul de k-moyennes des valeurs entre T1 et T2 dès qu'elles sont stables.

On peut noter que dès que le barycentre B2M (tenue à deux mains) est mis à jour après T1, le seuil S2M/1M est mis à jour en étant sensiblement augmenté, pour être placé à une distance D2 du barycentre B2M, et à une distance D1 du barycentre B1M (tenue à une main).

Pour rendre la distinction efficace, on peut choisir de décentrer le seuil S2M/1M par rapport à l'intervalle entre le barycentre B2M et le barycentre B1M. En particulier, on peut choisir :

$$0.45 \ (B2M-B1M) < D2 < 0.85 \ (B2M-B1M)$$

Avec donc

$$0.65 \ (B2M-B1M) < D1 < 0.15 \ (B2M-B1M)$$

Et plus préférentiellement :

$$0.65 \, (B2M-B1M) < D2 < 0.75 \, (B2M-B1M)$$

Avec donc

$$0.35 \, (B2M-B1M) < D1 < 0.25 \, (B2M-B1M)$$

Au temps T2, le signal de mesure SM chute et passe sous le seuil S2M/1M mis à jour, et se stabilise brièvement, ce qui permet de mettre à jour le barycentre B1M des valeurs du signal de mesure lorsque la jante 11 du volant est tenue à une main. On notera que juste après T2, pendant que le barycentre B1M est mis à jour, le barycentre B2M n'est pas mis à jour, mais par contre, le seuil S2M/1M est ajusté pour être sensiblement augmenté, afin de refléter la mise à jour du barycentre B1M.

Ensuite, entre T2 et T3, le volant est successivement tenu à deux ou une main, avec des mises à jour légères des barycentres et du seuil.

Cependant, au temps T3, le signal de mesure SM, passé sous le seuil minimal de prise en compte SB et sous le seuil S2M/1M remonte à un niveau plus élevé que les valeurs précédentes pour une main, tout en restant sous le seuil S2M/1M. Cela peut être dû à un changement de posture, de température, d'humidité, et les valeurs sont proches du seuil S2M/1M, ce qui pourrait conduire à des erreurs d'interprétation, le volant étant tenu à une main.

Cependant, grâce à la mise à jour qui est stoppée pendant la période où le signal est sous le seuil SB, mais reprend ensuite et s'effectue automatiquement, on peut noter que le barycentre B1M est rapidement recalculé et augmente, ce qui a pour effet de provoquer l'ajustement du seuil S2M/1M pour procurer un écart significatif entre le barycentre B1M et le seuil S2M/1M. la distinction de la tenue à une main ou deux mains reste fiable.

Au temps T4, le volant est à nouveau tenu à deux mains, et là encore, le signal de mesure SM est supérieur aux valeurs entre T1 et T2, ce qui provoque là aussi une mise à jour du barycentre B2M dès que les valeurs sont stabilisées, et le seuil S2M/1M est ajusté en fonction. On peut noter qu'entre T3 et T4, le barycentre B2M n'est pas mis à jour, et qu'entre T4 et T5, le barycentre B1M n'est pas mis à jour, puisque les valeurs du signal de mesure SM à ces instants appartiennent à l'autre catégorie.

Pour finir, on peut remarquer au temps T6 une baisse des valeurs du signal de mesure SM dans le domaine de tenue à une main, ce qui provoque automatiquement une baisse du barycentre B1M et donc du seuil S2M/1M, même si le barycentre B2M ne varie pas.

La mise à jour des barycentres B2M et B1M au cours du temps et l'ajustement consécutif du seuil S2M/1M permet de garantir que le seuil est adapté de manière dynamique au conducteur (sa morphologie, port de gants...) et aux conditions dans le véhicule (température, humidité...) pour clairement et efficacement distinguer une tenue particulière du volant d'une autre.

On peut aussi noter qu'une fois le seuil S2M/1M est ajusté, on peut prévoir d'ajuster un autre seuil, comme celui par exemple un seuil de tenue à quatre doigts, ou à trois doigts, en appliquant un taux de conversion prédéterminé. Cela présente l'avantage de ne pas attendre d'avoir des mesures dans le domaine considéré pour ajuster le seuil. Cela peut aussi éviter de faire des ajustements de seuils avec des valeurs faibles (donc présentant une plus grande erreur de mesure relative), ou dont la catégorisation peut être hasardeuse en raison de recouvrement de plages (trois doigts d'une grande main peuvent être confondus avec quatre doigts d'une petite main).

La figure 6 représente justement une phase d'initialisation des seuils afin d'éviter de catégoriser des valeurs de mesures dans une mauvaise affectation ou classe. Cela permet une convergence plus rapide vers une caractérisation optimale des mesures.

En effet, la figure 6 montre des valeurs délimitant les catégories, affectations ou classes de tenue du volant. Par exemple, des valeurs de mesure d'une tenue du volant à deux mains seront comprises entre le maximum M2M et le minimum m2M (ces valeurs peuvent notamment être définies en fonction de statistiques effectuées sur la population pour en couvrir par exemple 95%, ou aller du 5ème centile au 95ème centile). Ensuite, des valeurs de mesure d'une tenue du volant à une main seront comprises entre le maximum M1M et le minimum m1M.

On peut alors noter qu'une valeur de mesure entre M1M et m2M est équivoque, et ne peut être affectée à la tenue du volant à une main ou à la tenue du volant à deux mains.

Pour éviter de mettre à jour le barycentre d'une mauvaise catégorie, il est prévu, en début d'utilisation du véhicule (après un démarrage à froid ou une inutilisation prolongée), de pouvoir appliquer des seuils prédéterminés et ne pas les ajuster tant que les valeurs du signal de mesure SM ne sont pas dans un intervalle « de confiance ». Par exemple sur la figure 6, il peut être prévu d'attendre d'avoir des valeurs du signal de mesure SM située dans l'intervalle entre M1M et M2M, où l'on est sûr que le volant ne peut être tenu qu'à deux mains. Ainsi, avant T1, le seuil S2M/1M n'est pas ajusté, et commence à l'être uniquement lorsque des mesures stables sont effectuées entre M1M et M2M (et donc aussi au dessus du seuil SB). Cette phase d'initialisation peut comprendre, une fois le seuil S2M/1M (par essence le plus grand) ajusté, un ajustement automatique de tous les autres seuils avec un ou plusieurs taux de conversion prédéterminés, même si aucune mesure n'a été effectuée dans les plages de valeurs considérées.

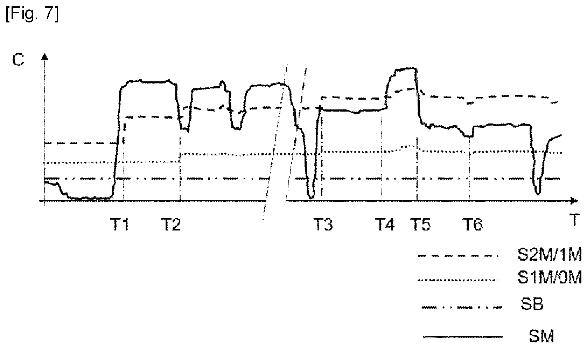

La figure 7 montre un exemple de signal de mesure au cours du temps, et du traitement effectué par le procédé selon la divulgation, dans le cas où plusieurs seuils de détection sont appliqués et suivis.

Dans le détail, la représentation au cours du temps est effectuée par :

- un trait continu pour le signal de mesure SM qui est le même que celui des figures 5 et 6,
- un trait en grands pointillés pour le seuil S2M/1M appliqué pour catégoriser une mesure indiquant que le volant est tenu à deux mains, ou à une main (identique à la figure 5),
- un trait en petits pointillés pour un seuil S1M/0M appliqué pour catégoriser une mesure indiquant que le volant est tenu à une seule main, ou avec zéro main (c'est-à-dire pas du tout tenu, ou tenu avec un ou deux doigts)
- un trait double mixte pour le seuil de bruit SB en deçà duquel les mesures ne sont pas prises en compte et/ou pas stockées dans les unités de stockage pour calcul..

Lors de la séquence de prise en main décrite à la figure 5, on a vu que l'on pouvait mettre à jour le seuil S2M/1M. Dans la cadre de cette situation schématisée figure 7, on peut choisir aussi de mettre à jour le seuil S1M/0M, si bien que l'écart entre ces deux seuils peut varier, comme on le voit par exemple au temps T1, T2 ou T3.

On peut prévoir de ne mettre à jour le seuil S1M/0M que si le seuil S2M/1M dépasse une certaine valeur, comme au temps T2 (le seuil S1M/0M ne varie pas avant T2), et/ou de mettre à jour le seuil S1M/0M en appliquant un facteur de réduction par rapport au seuil S2M1M, comme après le temps T2. On a ainsi deux seuils de détection évolutifs, mis à jour en fonction de valeurs de prise en main du volant qui correspondent à la morphologie du conducteur, de la température et/ou humidité dans l'habitacle..., ce qui améliore la pertinence des seuils de détection. Il est à noter que chaque seuil peut être mis à jour selon des règles spécifiques, simultanément ou indépendamment de l'autre.

En tout état de cause, la mise à jour est effectuée sur la base de mesures prises pendant que l'occupant touche le volant, et pas pendant que le volant n'est pas pris en main du tout, ce qui garantit que le signal pris en compte est significativement au dessus de zéro ou d'un seuil de bruit en dessous duquel on ne sait pas si le volant est pris en main ou pas. Ceci permet de se prémunir de faire des calculs sur des valeurs faibles et fortement variables en proportion.

On comprendra que diverses modifications et/ou améliorations évidentes pour l'homme du métier peuvent être apportées aux différents modes de réalisation de l'invention décrits dans la présente description sans sortir du cadre de l'invention.

**Revendications**

1. Procédé de mesure d'un contact ou d'une proximité d'un utilisateur avec un volant de véhicule (10),

le véhicule comprenant :

- le volant de véhicule (10),
- au moins un capteur de détection (21, 22, 23, 24) d'un contact ou d'une proximité de l'utilisateur avec le volant de véhicule (10), agencé pour générer un signal de mesure (SM),
- une première unité de mémoire stockant au moins un seuil de détection (S2M/1M),
- une deuxième unité de mémoire agencée pour stocker des valeurs du signal de mesure (SM),
- une unité de traitement agencée pour recevoir un signal de mesure (SM) du capteur de détection (21, 22, 23, 24) et pour comparer le signal de mesure (SM) avec le seuil de détection (S2M/1M), et pour participer à l'envoi d'un message d'alerte à l'utilisateur en fonction de la comparaison du signal de mesure (SM) avec le seuil de détection (S2M/1M),

le procédé comprenant les étapes consistant à :

- effectuer, avec le capteur de détection (21, 22, 23, 24), des mesures de contact ou de proximité de l'utilisateur avec le volant de véhicule (10) au cours d'une phase d'utilisation du volant de véhicule (10) conduisant à générer un signal de mesure (SM),

**caractérisé en ce que** le procédé comprend les étapes consistant à :

- stocker dans la deuxième unité de mémoire au moins une partie des valeurs des mesures effectuées pendant que l'occupant touche le volant,
- ajuster le seuil de détection (S2M/1M) en fonction d'un traitement effectué sur les valeurs stockées.

2. Procédé de mesure selon la revendication 1, dans lequel les mesures sont stockées dans la deuxième unité de mémoire si elles sont exclues d'une zone transitoire.

3. Procédé de mesure selon la revendication 2, dans lequel une zone de mesure est déclarée transitoire si au moins deux mesures successives diffèrent de plus de 5%, et de préférence de plus de 3%.

4. Procédé de mesure selon l'une des revendications 1 à 3, comprenant les étapes consistant à :

- comparer le seuil de détection (S2M/1M) ajusté avec au moins une mesure du signal de mesure (SM),
- participer à l'envoi d'un message d'alerte à l'utilisateur en fonction de la comparaison du signal de mesure (SM) avec le seuil de détection (S2M/1M).

5. Procédé de mesure selon la revendication 4, dans lequel l'étape de comparaison du seuil de détection (S2M/1M) ajusté avec au moins une mesure du signal de mesure (SM) est suivie d'une étape de catégorisation de la valeur mesurée dans une catégorie de quantité ou de nature de contact parmi une pluralité de catégories de quantité ou de nature de contact.

6. Procédé de mesure selon l'une des revendications 1 à 5, dans lequel le seuil de détection (S2M/1M) est ajusté sur la base d'un traitement des valeurs stockées comprenant un partitionnement en k-moyennes.

7. Procédé de mesure selon la revendication 6, dans lequel un nombre k de partitions est déterminé, dans lequel au moins deux partitions adjacentes présentent chacune un barycentre, et dans lequel le seuil de détection (S2M/1M) est ajusté pour être compris dans une plage allant de 45% à 85% de l'intervalle allant du plus petit barycentre au plus grand barycentre des deux partitions adjacentes, de préférence dans une plage allant de 55% à 75% de l'intervalle allant du plus petit barycentre au plus grand barycentre des deux partitions adjacentes et très préférentiellement dans une plage allant de 75% à 65% de l'intervalle allant du plus petit barycentre au plus grand barycentre des deux partitions adjacentes.

8. Procédé de mesure selon l'une des revendications 1 à 7, dans lequel le seuil de détection (S2M/1M) est ajusté dans une plage de valeurs bornée par une valeur haute et/ou une valeur basse.

9. Procédé de mesure selon l'une des revendications 1 à 8, comprenant une phase d'initialisation, comprenant les étapes consistant à:

- initialiser le seuil de détection (S2M/1M) à une valeur de base,
- effectuer, avec le capteur de détection (21, 22, 23, 24), des mesures de contact ou de proximité de l'utilisateur avec le volant de véhicule (10) au cours d'une phase d'utilisation du volant de véhicule (10) conduisant à générer un signal de mesure (SM),
- stocker dans la deuxième unité de mémoire les valeurs des mesures effectuées jusqu'à atteindre le nombre de valeurs prédéterminé.

10. Procédé de mesure selon la revendication 9, dans lequel le stockage dans la deuxième unité de mémoire d'une valeur d'une mesure n'est effectué que si un écart entre deux mesures successives est inférieur à moins de 5%, et de préférence à moins de 3%.

11. Procédé de mesure selon la revendication 9 ou 10, dans lequel le stockage dans la deuxième unité de mémoire d'une valeur d'une mesure n'est effectué que si la valeur est comprise dans un intervalle de confiance prédéterminé, par exemple compris dans une plage de valeur allant de 50 % à 100% de la pleine échelle du capteur de mesure.

12. Procédé de mesure selon l'une des revendications 9 à 11, dans lequel, une fois le nombre de valeurs stockées prédéterminé atteint, un premier seuil de détection (S2M/1M) est ajusté, et dans lequel un deuxième seuil de détection (S2M/1M) est ajusté sur la base du premier seuil de détection (S2M/1M).

13. Procédé de mesure selon l'une des revendications 1 à 12,

le volant de véhicule (10) comprenant deux capteurs de détection d'un contact ou d'une proximité de l'utilisateur avec le volant de véhicule (10),

dans lequel les étapes de mesure de contact ou de proximité, de stockage de valeurs des mesures, et d'ajustement du seuil de détection (S2M/1M) sont effectuées pour chaque capteur, de préférence indépendamment, par exemple de manière séquentielle, ou décalée ou simultanée.

14. Système d'assistance au conducteur d'un véhicule, comprenant :

- au moins un capteur de détection (21, 22, 23, 24) d'un contact ou d'une proximité de l'utilisateur avec le volant de véhicule (10), agencé pour générer un signal de mesure (SM),
- une première unité de mémoire stockant au moins un seuil de détection (S2M/1M),
- une deuxième unité de mémoire agencée pour stocker des valeurs du signal de mesure (SM),
- une unité de commande agencée pour mettre en œuvre le procédé selon l'une des revendications 1 à 13.

15. Véhicule automobile, comprenant le système d'assistance selon la revendication 14.


**Patentansprüche**

1. Verfahren zum Messen eines Kontakts oder einer Nähe eines Benutzers zu einem Fahrzeuglenkrad (10), das Fahrzeug umfassend:

- das Fahrzeuglenkrad (10),
- mindestens einen Sensor (21, 22, 23, 24) zum Erfassen eines Kontakts oder einer Nähe des Benutzers zu dem Fahrzeuglenkrad (10), der zum Erzeugen eines Messsignals (SM) eingerichtet ist,
- eine erste Speichereinheit, die mindestens einen Erfassungsschwellenwert (S2M/1M) speichert,
- eine zweite Speichereinheit, die zum Speichern von Werten des Messsignals (SM) eingerichtet ist,
- eine Verarbeitungseinheit, die zum Empfangen eines Messsignals (SM) von dem Erfassungssensor (21, 22, 23, 24) und zum Vergleichen des Messsignals (SM) mit dem Erfassungsschwellenwert (S2M/1M) und zum Teilnehmen an dem Senden einer Warnmeldung an den Benutzer in Abhängigkeit von dem Vergleich des Messsignals (SM) mit dem Erfassungsschwellenwert (S2M/1M) eingerichtet ist,
das Verfahren umfassend die Schritte, bestehend aus:

- Durchführen, mit dem Erfassungssensor (21, 22, 23, 24), von Messungen des Kontakts oder der Nähe des Benutzers zu dem Fahrzeuglenkrad (10) während einer Nutzungsphase des Fahrzeuglenkrads (10), was zu dem Erzeugen eines Messsignals (SM) führt,

**dadurch gekennzeichnet, dass** das Verfahren die Schritte umfasst, bestehend aus:

- Speichern von mindestens einem Teil der Werte der Messungen, die durchgeführt werden, während der Insasse das Lenkrad berührt, in der zweiten Speichereinheit,
- Anpassen des Erfassungsschwellenwerts (S2M/1M) in Abhängigkeit von einer Verarbeitung, die an den gespeicherten Werten durchgeführt wird.

2. Messverfahren nach Anspruch 1, wobei die Messungen in der zweiten Speichereinheit gespeichert werden, falls sie aus einer Übergangszone ausgeschlossen sind.

3. Messverfahren nach Anspruch 2, wobei eine Messzone als vorübergehend erklärt wird, falls sich mindestens zwei aufeinanderfolgende Messungen um mehr als 5 % und vorzugsweise um mehr als 3 % voneinander unterscheiden.

4. Messverfahren nach einem der Ansprüche 1 bis 3, umfassend die Schritte, bestehend aus:

- Vergleichen des angepassten Erfassungsschwellenwerts (S2M/1M) mit mindestens einer Messung des Messsignals (SM),
- Teilnehmen an dem Senden einer Warnmeldung an den Benutzer in Abhängigkeit von dem Vergleich des Messsignals (SM) mit dem Erfassungsschwellenwert (S2M/1M).

5. Messverfahren nach Anspruch 4, wobei auf den Schritt des Vergleichens des angepassten Erfassungsschwellenwerts (S2M/1M) mit mindestens einer Messung des Messsignals (SM) ein Schritt eines Kategorisierens des gemessenen Werts in eine Kategorie einer Kontaktquantität oder -art aus einer Vielzahl von Kategorien der Kontaktquantität oder -art folgt.

6. Messverfahren nach einem der Ansprüche 1 bis 5, wobei der Erfassungsschwellenwert (S2M/1M) auf der Basis einer Verarbeitung der gespeicherten Werte angepasst wird, umfassend eine Partition in k-Mittelwerte.

7. Messverfahren nach Anspruch 6, wobei eine Anzahl k von Partitionen bestimmt wird, wobei mindestens zwei benachbarte Partitionen jeweils einen Schwerpunkt aufweisen, und wobei der Erfassungsschwellenwert (S2M/1M) angepasst wird, um in einem Bereich von 45 % bis 85 % des Intervalls von dem kleinsten Schwerpunkt bis zu dem größten Schwerpunkt der zwei benachbarten Partitionen zu liegen, vorzugsweise in einem Bereich von 55 % bis 75 % des Intervalls von dem kleinsten Schwerpunkt bis zu dem größten Schwerpunkt der zwei benachbarten Partitionen und besonders bevorzugt in einem Bereich von 75 % bis 65 % des Intervalls von dem kleinsten Schwerpunkt bis zu dem größten Schwerpunkt der zwei benachbarten Partitionen.

8. Messverfahren nach einem der Ansprüche 1 bis 7, wobei der Erfassungsschwellenwert (S2M/1M) in einem Wertebereich angepasst wird, der durch einen hohen Wert und/oder einen niedrigen Wert begrenzt ist.

9. Messverfahren nach einem der Ansprüche 1 bis 8, umfassend eine Nullstellungsphase, umfassend die Schritte, bestehend aus:

   - Nullstellen des Erfassungsschwellenwerts (S2M/1M) auf einen Basiswert,
   - Durchführen, mit dem Erfassungssensor (21, 22, 23, 24), von Messungen des Kontakts oder der Nähe des Benutzers zu dem Fahrzeuglenkrad (10) während einer Nutzungsphase des Fahrzeuglenkrads (10), was zu dem Erzeugen eines Messsignals (SM) führt,
   - Speichern der Werte der durchgeführten Messungen in der zweiten Speichereinheit, bis die zuvor bestimmte Anzahl von Werten erreicht ist.

10. Messverfahren nach Anspruch 9, wobei die Speicherung eines Messwerts in der zweiten Speichereinheit nur dann durchgeführt wird, wenn eine Abweichung zwischen zwei aufeinanderfolgenden Messungen weniger als 5 %, und vorzugsweise weniger als 3 % beträgt.

11. Messverfahren nach Anspruch 9 oder 10, wobei die Speicherung eines Messwerts in der zweiten Speichereinheit nur dann durchgeführt wird, wenn der Wert in einem zuvor bestimmten Vertrauensintervall liegt, beispielsweise in einem Wertebereich von 50 % bis 100 % des Skalenendwerts des Messsensors.

12. Messverfahren nach einem der Ansprüche 9 bis 11, wobei, sobald die zuvor bestimmte Anzahl gespeicherter Werte erreicht ist, ein erster Erfassungsschwellenwert (S2M/1M) angepasst wird und wobei ein zweiter Erfassungsschwellenwert (S2M/1M) auf der Basis des ersten Erfassungsschwellenwerts (S2M/1M) angepasst wird.

13. Messverfahren nach einem der Ansprüche 1 bis 12, das Fahrzeuglenkrad (10) umfassend zwei Sensoren zum Erfassen eines Kontakts oder einer Nähe des Benutzers zu dem Fahrzeuglenkrad (10), wobei die Schritte des Messens des Kontakts oder der Nähe, des Speicherns der Messwerte und des Anpassens des Erfassungsschwellenwerts (S2M/1M) für jeden Sensor vorzugsweise unabhängig, beispielsweise sequenziell, oder versetzt oder gleichzeitig durchgeführt werden.

14. Fahrerassistenzsystem für ein Fahrzeug, umfassend:

   - mindestens einen Sensor (21, 22, 23, 24) zum Erfassen eines Kontakts oder einer Nähe des Benutzers zu dem Fahrzeuglenkrad (10), der zum Erzeugen eines Messsignals (SM) eingerichtet ist,
   - eine erste Speichereinheit, die mindestens einen Erfassungsschwellenwert (S2M/1M) speichert,
   - eine zweite Speichereinheit, die zum Speichern von Werten des Messsignals (SM) eingerichtet ist,
   - eine Steuereinheit, die zum Implementieren des Verfahrens nach einem der Ansprüche 1 bis 13 eingerichtet ist.

15. Kraftfahrzeug, umfassend das Assistenzsystem nach Anspruch 14.

# EP 4 015 276 B1

**Claims**

1. A method of measuring a contact or proximity of a user with a vehicle steering wheel (10),

   the vehicle comprising:

      - the vehicle steering wheel (10),
      - at least one sensor (21, 22, 23, 24) for detecting a contact or proximity of the user with the vehicle steering wheel (10), arranged to generate a measurement signal (SM),
      - a first memory unit storing at least one detection threshold (S2M/1M),
      - a second memory unit arranged to store values of the measurement signal (SM),
      - a processing unit arranged to receive a measurement signal (SM) from the detection sensor (21, 22, 23, 24) and to compare the measurement signal (SM) with the detection threshold (S2M/1M), and to participate in sending an alert message to the user on the basis of the comparison of the measurement signal (SM) with the detection threshold (S2M/1M),

   the method comprising the steps consisting in:

      - measuring, with the detection sensor (21, 22, 23, 24), the contact or proximity of the user with the vehicle steering wheel (10) during a phase of use of the vehicle steering wheel (10) leading to a measurement signal (SM) being generated,

   **characterized in that** the method comprises the steps consisting in:

      - storing in the second memory unit at least part of the values of the measurements taken while the occupant touches the steering wheel,
      - adjusting the detection threshold (S2M/1M) on the basis of a processing carried out on the stored values.

2. The measuring method according to claim 1, wherein the measurements are stored in the second memory unit if they are excluded from a transitional zone.

3. The measuring method according to claim 2, wherein a measuring zone is declared transitional if at least two successive measurements differ by more than 5%, and preferably by more than 3%.

4. The measuring method according to any of claims 1 to 3, comprising the steps consisting in:

      - comparing the adjusted detection threshold (S2M/1M) with at least one measurement of the measurement signal (SM),
      - participating in sending an alert message to the user, on the basis of the comparison of the measurement signal (SM) with the detection threshold (S2M/1M).

5. The measuring method according to claim 4, wherein the step of comparing the adjusted detection threshold (S2M/1M) with at least one measurement of the measurement signal (SM) is followed by a step of categorizing the measured value in a quantity or nature-of-contact category from among a plurality of quantity or nature-of-contact categories.

6. The measuring method according to any of claims 1 to 5, wherein the detection threshold (S2M/1M) is adjusted on the basis of a processing of the stored values comprising a k-means partitioning.

7. The measuring method according to claim 6, wherein a number k of partitions is determined, wherein at least two adjacent partitions each have a barycenter, and wherein the detection threshold (S2M/1M) is adjusted so as to fall within a range of 45% to 85% of the interval going from the smallest barycenter to the largest barycenter of the two adjacent partitions, preferably within a range of 55% to 75% of the interval going from the smallest barycenter to the largest barycenter of the two adjacent partitions and very preferentially within a range of 75% to 65% of the interval going from the smallest barycenter to the largest barycenter of the two adjacent partitions.

8. The measuring method according to any of claims 1 to 7, wherein the detection threshold (S2M/1M) is adjusted within a range of values limited by a high value and/or a low value.

13

9. The measuring method according to any of claims 1 to 8, comprising an initialization phase, comprising the steps consisting in:

   - initializing the detection threshold (S2M/1M) to a base value,
   - measuring, with the detection sensor (21, 22, 23, 24), the contact or proximity of the user with the vehicle steering wheel (10) during a phase of use of the vehicle steering wheel (10) leading to a measurement signal (SM) being generated,
   - storing in the second memory unit the values of the measurements taken until the predetermined number of values is reached.

10. The measuring method according to claim 9, wherein the storage in the second memory unit of a value of a measurement is only carried out if a difference between two successive measurements is less than 5%, and preferably less than 3%.

11. The measuring method according to claim 9 or 10, wherein the storage in the second memory unit of a value of a measurement is only carried out if the value falls within a predetermined confidence interval, for example within a value range of 50% to 100% of the full scale of the measurement sensor.

12. The measuring method according to any of claims 9 to 11, wherein, once the predetermined number of stored values is reached, a first detection threshold (S2M/1M) is adjusted, and wherein a second detection threshold (S2M/1M) is adjusted on the basis of the first detection threshold (S2M/1M).

13. The measuring method according to any of claims 1 to 12, the vehicle steering wheel (10) comprising two sensors for detecting a contact or proximity of the user with the vehicle steering wheel (10),
    wherein the steps of measuring a contact or proximity, of storing values of measurements, and of adjusting the detection threshold (S2M/1M) are performed for each sensor, preferably independently, for example in a sequential, staggered or simultaneous manner.

14. An assistance system for the driver of a vehicle, comprising:

    - at least one sensor (21, 22, 23, 24) for detecting a contact or proximity of the user with the vehicle steering wheel (10), arranged to generate a measurement signal (SM),
    - a first memory unit storing at least one detection threshold (S2M/1M),
    - a second memory unit arranged to store values of the measurement signal (SM),
    - a control unit arranged to implement the method according to any of claims 1 to 13.

15. A motor vehicle, comprising the assistance system according to claim 14.

[Fig. 1]

[Fig. 2]

[Fig. 3]

11

21

22

23

23

[Fig. 4]

11

21

22

23

24

[Fig. 5]

| | SM |
|---|---|
| | B2M |
| | S2M/1M |
| | B1M |
| | SB |

[Fig. 6]

| | SM |
|---|---|
| | B2M |
| | S2M/1M |
| | B1M |
| | SB |

[Fig. 7]

| | S2M/1M |
|---|---|
| | S1M/0M |
| | SB |
| | SM |

**EP 4 015 276 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170029021 A1
- JP 2019023012 A